# EUROPEAN PATENT APPLICATION

(11) **EP 1 111 896 A1**
(43) Date of publication of application: **27.06.2001**
(21) Application number: 99403244.9
(22) Date of filing: 21.12.1999
(51) Int. Cl.: H04M 11/06

(54) **Central office for a full digital loop**

(71) Applicant: ALCATEL, 75008 Paris (FR)
(72) Inventor: Van Wonterghem, Geert Arthur Edith, 9900 Eeklo (BE)
(74) Representative: Plas, Axel

(57) **Abstract**

In a full digital loop, telephone signals are digitised and in-band transferred, simultaneously with digital data. In case of emergency, e.g. a power supply interruption at the customer premises (ADSL_NT), a telephone life-line (S3, S2, S1, LT POTS TERMINATION) survives. This telephone life-line (S3, S2, S1, LT POTS TERMINATION) by-passes the digital modems (NT ADSL MODEM, LT ADSL MODEM) at the customer premises (ADSL_NT) and central office (ADSL_LT), and consists in the central office (ADSL_LT) of a telephone signal line termination (LT POTS TERMINATION) not comprising a ringing signal generator. Thus, only calls from the customer premises (ADSL_NT) to the central office (ADSL_LT) can be made in emergency situations.

## Description

The present invention relates to a central office for use in a full digital loop as described in the non-characteristic part of claim 1, and a method to transfer digital data and at least one telephone signal as described in the non-characteristic part of claim 2.

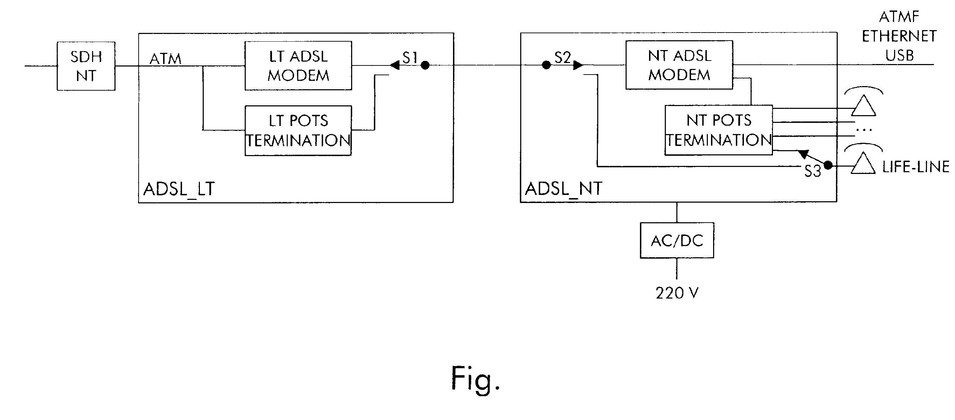

Such a central office and method are already known in the art, e.g. from *the European Patent Application EP 0 740 451 entitled 'Method*, *interface* modules and telephone network for multiplexing and demultiplexing an analog MTS (Message Telephone Service) signal and an ADSL (Asymmetric Digital Subscriber Line) datastream'. In fact, this patent application describes a full digital loop wherein telephone signals are digitised and encapsulated in digital data frames to be in-band transferred. In the known full digital loop, the POTS (Plain Old Telephone Service) signalling, such as ringing signal and metering pulses, is encoded and also encapsulated in the digital data frames. In comparison with the nowadays commercially available digital subscriber line systems that provide digital data transfer in overlay with POTS (Plain Old Telephone Service) by using separate frequency bands for analogue POTS transfer and digital data transfer, the full digital loop has several advantages: no bulky data/POTS splitter is required anymore, the available bandwidth for the digital data bands increases, several telephone signals can be multiplexed with digital data on a single twisted pair telephone wire, and the transmission quality improves because the complete transmission is digitised and high power signals typically causing interference (such as the ringing signal) have been replaced with codes. To maintain telephone service even when the digital data service fails, for example as a result of a power supply interruption at the customer premises, an alternative path or by-pass for a telephone lifeline is foreseen in the full digital loop described in the above mentioned European Patent Application EP 0 740 451. This by-pass consists of switching elements, referred to by S1 and S2 in the central office drawn in the figure accompanying EP 0 740 451, and referred to by S1' and S2' in the customer premises drawn in that figure. Via these switching elements, a phone at the customer premises can be connected to a POTS line termination in the central office without passing through the digital data modems in the customer premises and central office. To maintain the telephone service, the known full digital loop thus requires the presence of a complete POTS line termination in the central office, which is a rather voluminous and expensive linecard that will only be active in emergency situations.

An object of the present invention is to provide a full digital loop and related method to transfer digital data and telephone signals similar to the known one, but wherein the central office is made less bulky and expensive.

According to the invention, this object is achieved by the central office defined by claim 1 and the method to transfer digital data and at least one telephone signal as defined by claim 2.

Indeed, by omitting the high voltage ringing generator from the POTS line termination in the central office, a significant cost and volume reduction is achieved at the central office. Moreover, omission of the ringing generator makes it possible to develop a low-cost line-driver for the central office that takes care of the low frequent voice and high frequent digital data. The invention is based on the insight that in case of emergency, it is only necessary to be able to make outgoing calls. The drawback that the central office cannot announce incoming calls to the customer premises as a consequence of which the customer becomes unreachable during emergency situations, is a small price paid for the significant volume and cost savings at the central office when the ringing generator can be removed from each POTS linecard therein.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above mentioned and other objects and features of the invention will become more apparent and the invention itself will be best understood by referring to the following description of an embodiment taken in conjunction with the accompanying drawing Fig. which is a block scheme of a full digital loop comprising an embodiment of the central office ADSL_LT according to the present invention.

The full digital loop of Fig. consists of an Asymmetric Digital Subscriber Line line termination ADSL_LT, located at the central office, and an Asymmetric Digital Subscriber Line network termination ADSL_NT, located at the customer premises. A twisted pair telephone line interconnects the ADSL line termination ADSL_LT and the ADSL network termination ADSL_NT.

The ADSL line termination ADSL_LT contains an ADSL modulator/demodulator LT ADSL MODEM, a Plain Old Telephone Service linecard LT POTS TERMINATION, and a switching element S1. Both the ADSL modem LT ADSL MODEM and the POTS linecard LT POTS TERMINATION are connected to an Asynchronous Transfer Mode interface ATM of the ADSL line termination ADSL_LT. Via this ATM interface ATM, the ADSL line termination ADSL_LT interfaces to a Synchronous Digital Hierarchy network termination SDH_NT. The ADSL modem LT ADSL MODEM and the POTS linecard LT POTS TERMINATION further are also coupled to terminals of the switching element S1 so that the switching element either couples the ADSL modem LT ADSL MODEM or the POTS linecard LT POTS TERMINATION to the twisted pair telephone line.

The ADSL network termination ADSL_NT contains an ADSL modulator/demodulator NT ADSL MODEM, a Plain Old Telephone Service linecard NT POTS TERMINATION, and switching elements S2 and S3. Switching element S2, coupled to the twisted pair telephone line on the one hand en having terminals whereto respectively the ADSL modem NT ADSL MODEM and a terminal of the switching element S3 are coupled to on the other hand, either couples the ADSL modem NT ADSL MODEM or a telephone set LIFE-LINE connected to switching element S3 to the twisted pair telephone line. The ADSL network termination ADSL_NT further is equipped with a digital data interface that may for instance be an ATMF (ATM Forum) interface, an ETHERNET interface, or a USB (Universal Subscriber Bus) interface, and a number of POTS interfaces whereto telephone sets are coupled. One of these POTS interfaces, the above mentioned telephone set LIFE-LINE is connected. The ADSL modem NT ADSL MODEM is connected to the digital data interface ATMF ETHERNET USB, and also is coupled to the POTS interfaces via the POTS linecard NT POTS TERMINATION. Switching element S3, as already explained, can couple the telephone set LIFE-LINE to the switching element S2, by-passing the POTS linecard NT POTS TERMINATION and the ADSL modem NT ADSL MODEM, or alternatively can couple the telephone set LIFE-LINE via the POTS linecard NT POTS TERMINATION to the ADSL modem NT ADSL MODEM. The ADSL network termination ADSL_NT at the customer premises is powered via the 220 V electricity distribution network and a power converter AC/DC.

In the following paragraph, the functioning of the full digital loop of Fig. during normal operation will be described. This functioning basically does not differ from the functioning of the digital loop known from EP 0 740 451. Thereafter, it will be supposed that the power supply AC/DC, 220 V at the customer premises fails and the functioning of the full digital loop of Fig. in case of emergency will be described in detail.

The positioning of the switching elements S1, S2 and S3 during normal operation is shown in the drawing Fig. In the ADSL network termination ADSL NT, the voice signals from the telephone sets (including LIFE-LINE) are compressed and put into ATM (Asynchronous Transfer Mode) cells by the POTS linecard NT POTS TERMINATION. The ATM cells containing the voice signals as well as the digital data received from the digital data interface ATMF ETHERNET USB are all encapsulated in ADSL frames by the ADSL modem NT ADSL MODEM. The so generated stream of digital symbols, which may be a stream of DMT (Discrete Multi Tone) symbols in case DMT modulation is applied by the ADSL modem NT ADSL MODEM or a stream of QAM (Quadrature Amplitude Modulation) symbols in case single carrier QAM modulation is applied by the ADSL modem NT ADSL MODEM, is transferred over the twisted pair telephone wire to the central office side. In the ADSL line termination ADSL_LT at the central office side, the digital data stream is demodulated in the ADSL modem LT ADSL MODEM and the so generated ATM cells carrying voice signals or digital data are sourced into an SDH (Synchronous Digital Hierarchy) network via the SDH network termination SDH NT. In the opposite direction, the downstream direction from the central office to the customer premises, incoming telephone signals and incoming digital data e.g. downloaded from the Internet, are encapsulated in ADSL frames by the ADSL modem LT ADSL MODEM in the ADSL line termination ADSL LT. The ADSL frames are transferred over the twisted pair telephone line and demodulated at the customer premises by the ADSL modem NT ADSL MODEM. The so generated ATM cells containing digital data are sourced via the digital data interface ATMF ETHERNET USB towards the PC of the customer, whereas the ATM cells containing voice are de-compressed by the POTS linecard NT POTS TERMINATION and supplied to the telephone sets. The POTS linecard NT POTS TERMINATION also decodes the POTS signalling and replaces the codes with a ringing signal, metering pulses, and so on. No splitter is required at the customer premises or at the central office to separate the voice signals from the digital data and the ADSL modems LT ADSL MODEM and NT ADSL MODEM can use the traditional POTS frequency band (i.e. the lower four tones in case Discrete Multi Tone as specified in the ITU G.99x and ANSI T1E1.413 standards is used as line code modulation technique), in addition to the upstream and downstream frequency bands reserved for digital data transfer.

In case of power supply failure at the customer premises, it is important that the customer can still make outgoing telephone calls. This is the so-called telephone life-line. Thereto, the switches S1, S2 and S3 switch to the position not shown in the drawing Fig. as soon as power supply failure is detected. A telephone call from the telephone set LIFE-LINE then by-passes the POTS linecard NT POTS TERMINATION and the ADSL modem NT ADSL MODEM since the switches S3 and S2 directly couple the telephone set LIFE-LINE to the twisted pair telephone line. At central office, the outgoing telephone call is handled by the POTS linecard LT POTS TERMINATION which is a linecard that has all capabilities to handle outgoing voice signals but has no functionality to handle incoming calls. An incoming call received from the SDH network and destined to the telephone set LIFE-LINE cannot be delivered to this telephone set because the POTS linecard LT POTS TERMINATION has no ringing signal generator and consequently cannot announce the incoming call. In the emergency mode, the customer in other words becomes unreachable by telephone, but the outgoing POTS service survives.

The above described setup raises the issue of when the ADSL line termination ADSL_LT will switch from the ADSL modem LT ADSL MODEM to the POTS linecard LT POTS TERMINATION. When the digital data service is on, a possible solution is that the ADSL line termination ADSL_LT monitors the line and sees that the upstream signal suddenly stops. When the digital data service is off, the ADSL line driver can for instance send a DC voltage. When the ADSL network termination ADSL_NT switches to the emergency state, it for example puts a resistor in parallel causing a voltage drop on the line. The ADSL receiver in the ADSL modem LT ADSL MODEM at the central office side can sense this. To return from the emergency state to the normal operation mode, the ADSL modem LT ADSL MODEM will regularly check, when the POTS life-line is not active, if the digital data link is working again.

It is noticed that the switching means S1, S2 and S3 can be realised by hardware implemented switches, just like they are drawn in the figure Fig., but alternatively can be replaced with software implemented controllers or drivers.

It is also remarked that alternatively to the above described embodiment, all telephone sets coupled to the ADSL network termination ADSL_NT may be given the opportunity to make an outgoing call via the life-line in case of emergency. The by-passing life-line in such a network termination will be assigned to the first telephone terminal that hooks off.

Also alternatively to the above described embodiment, the ADSL modem NT ADSL MODEM may remain working with limited bandwidth as life-line during emergency situations. In such an implementation of the present invention, a voice interface without ringing is supplied to the ADSL modem NT ADSL MODEM in emergency situations.

Another remark is that the encapsulation of voice and/or data in ATM cells is rather an exemplary choice and of course not a requirement for implementation of the current invention. If the ADSL loop of Fig. is used to access the Internet instead of an SDH network, data and voice may be encapsulated in IP (Internet Protocol) packets. The full digital loop of the current invention than realises VolP (Voice over IP) and VoDSL (Voice over DSL) transmission while maintaining outgoing POTS service in case the ADSL equipment fails.

Although it was supposed above that the emergency mode was entered after a failure in power supply at the customer premises, other failures can cause a system according to the present invention to switch from normal operation mode to the emergency mode. If for example the digital communication between the ADSL modems NT ADSL MODEM and LT ADSL MODEM cannot be realised because the modems do not get synchronised, because some hardware at the customer premises or central office was damaged e.g. due to lightning or other weather or environmental conditions, the switching elements S1, S2 and S3 will also switch to the emergency state so that an outgoing POTS lifeline survives.

It is also remarked that although an implementation of the invention in an ADSL (Asymmetric Digital Subscriber Line) system has been described, any person skilled in the art of designing and implementing Digital Subscriber Line will understand from the above explanation that realising a full digital loop with voice by-pass circuit where is switched to in emergency conditions and which lacks a ringing generator at the central office side so that only outgoing calls can be made in the emergency mode, is also possible in other DSL (Digital Subscriber Line) systems like a VDSL (Very High Speed Digital Subscriber Line) system, an SDSL (Symmetrical Digital Subscriber Line) system, an HDSL (High Speed Digital Subscriber Line) system, and has same advantages there.

Furthermore, it is remarked that an embodiment of the present invention is described above rather in terms of functional blocks. From the functional description of these blocks it will be obvious for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention.

## Claims

1. Central office (ADSL_LT) for use in a full digital loop, said central office (ADSL_LT) comprising a digital modem (LT ADSL MODEM) capable to simultaneously transceive digital data and at least one in-band telephone signal during normal operation,
CHARACTERISED IN THAT said central office (ADSL_LT) further comprises a by-pass circuit (LT POTS TERMINATION, S1) for a telephone signal in case of emergency, said by-pass circuit (LT POTS TERMINATION, S1) not comprising a ringing signal generator.

2. Method to transfer digital data and at least one telephone signal between a central office (ADSL_LT) and customer premises (ADSL_NT) whereby said at least one telephone signal is transferred in-band, simultaneously with said digital data during normal operation,
CHARACTERISED IN THAT in case of emergency only transfer of a telephone signal from said customer premises (ADSL_NT) to said central office (ADSL_LT) is supported via a by-pass life-line (S3, S2, S1, LT POTS TERMINATION).
